# FASCICULE DE BREVET EUROPEEN

(11) **EP 3 410 859 B1**
(45) Date de publication et mention de la délivrance du brevet: **01.05.2019**
(21) Numéro de dépôt: 17706695.8
(22) Date de dépôt: 02.02.2017
(51) Int. Cl.: A21C 11/00

(54) **SYSTEME DE MANUTENTION DE PREPARATIONS CULINAIRES**
SYSTEM ZUR HANDHABUNG VON LEBENSMITTELPRÄPARATEN
SYSTEM FOR HANDLING CULINARY PREPARATIONS

(30) Priorité: 03.02.2016 FR 1650844; 31.01.2017 FR 1750806
(43) Date de publication de la demande: 12.12.2018
(73) Titulaire: Ekim, 77144 MontEvrain (FR)
(72) Inventeur: HAMON, Cyrill, 77144 Montevrain (FR); ROVERSO, Sébastien, 77144 Chalifert (FR); RASCLE, Didier, 77144 Montevrain (FR)
(74) Mandataire: IPAZ
(86) Numéro de dépôt international: PCT/EP2017/052225
(87) Numéro de publication internationale: WO 2017/134149

(56) Documents cités:
- EP-A1- 2 174 549
- EP-A2- 1 107 199
- US-A1- 2007 178 198

## Description

### Domaine technique

La présente invention se rapporte au domaine de la manutention de préparations culinaires. Elle concerne un système de manutention de préparations alimentaires pour le convoyage de préparation entre différentes stations de préparation, tel que, entre autre, la station de formage d'une pâte, la station de dépôt de sauce, la station de dépôt de garnitures, la station de cuisson et la station de conditionnement.

La présente invention concerne en particulier la manutention de préparations culinaires à base de pâte à cuire et l'utilisation du système dans une machine automatique de préparations culinaires, en particulier pour la confection de pizzas. La présente invention se situe dans le domaine de la distribution automatique, de la restauration rapide, quasi-industrielle et des préparations culinaires industrielles.

### Etat de la technique antérieure

On connaît dans l'état de la technique antérieure des automates pour la confection de pizzas dans lesquels le convoyage de la préparation entre les différentes stations de la chaine de préparation est réalisé par l'intermédiaire de plusieurs dispositifs de manutention différents. Ainsi, le document EP1107199 divulgue l'utilisation d'un premier dispositif de manutention comprenant des éléments de préhension permettant de transporter un pâton depuis un espace de stockage vers un récipient. Un deuxième dispositif de manutention distinct agencé sous forme de pelle et comprenant un levier de déchargement permet de transporter la pizza depuis le récipient vers un poste de cuisson. Enfin, un troisième dispositif comportant une grille agencé pour recevoir la préparation permet de transporter la préparation depuis le four vers un poste de distribution. Un inconvénient de ce type de système de convoyage est qu'il nécessite l'utilisation de plusieurs éléments de manutention différents. Cela a pour effet d'augmenter la taille des automates, de complexifier leur conception et entretien, et d'accroître le risque de panne. Un autre inconvénient réside dans le type de d'éléments de manutention utilisés, certains de ces éléments en enserrant la préparation pour la maintenir occasionne des marques sur cette dernière. D'autres éléments nécessitent une étape de transvasement de la préparation d'un élément à l'autre pouvant engendrer des défauts esthétique, voire des pertes de garnitures.

On connaît également dans l'état de la technique antérieure le document FR2971122 décrivant l'utilisation d'un enfourneur automatique permettant de charger et décharger des pizzas, des tartes ou des pains. L'invention divulgue un dispositif comprenant des éléments de préhension agencés pour récupérer la préparation et sur lesquels reposent la préparation, et un poussoir permettant de décharger la préparation. Un inconvénient de ce type de moyen de manutention est lié au fait que les préparations peuvent être endommagées ou même percées par l'élément de préhension lors du chargement ou par le poussoir lors du déchargement. De plus, les éléments de préhension engendrent des frottements importants et répétés sur le support sur lequel la préparation repose.

Un but de l'invention est de proposer un système de manutention unique ayant comme objet de répondre aux différents inconvénients précédemment cités.

Un autre but de l'invention est de proposer un système de manutention unique permettant de convoyer une préparation culinaire entre différentes stations durant la préparation.

Un autre but de l'invention est de pouvoir déposer une préparation culinaire et prendre une autre préparation culinaire lors d'un même passage.

Un autre but de l'invention est de proposer un système permettant d'assurer une cuisson homogène des préparations culinaires.

Un autre but de l'invention est de proposer un système étant adapté à tout type de support de la préparation culinaire, en particulier aux supports fragiles tels que le support comportant un revêtement, par exemple le téflon, ou les supports de cuissons, par exemple les pierres réfractaires.

Un autre but de l'invention est de pouvoir décoller la préparation culinaire de son support de manière fiable, reproductible et sans l'endommager.

Un autre but de l'invention est de proposer un système permettant de manipuler des préparations culinaires souples.

### Exposé de l'invention

A cet effet, l'invention propose un système de manutention de préparations culinaires comprenant :
- un support comprenant :
   - une surface supérieure agencée pour recevoir une préparation culinaire, et
   - une pluralité de traversées s'étendant entre la surface supérieure et une surface inférieure,
- un dispositif de transfert comprenant une pluralité de parties saillantes,
- un système de mise en mouvement relatif du support par rapport à au moins une partie du dispositif de transfert.

Selon l'invention, le système est caractérisé en ce que le système de mise en mouvement relatif est agencé pour positionner le système dans :
- une position basse, dans laquelle aucune partie saillante n'est en saillie par rapport à la surface supérieure du support,
- une position haute, dans laquelle une extrémité d'au moins une partie saillante est portée en saillie, via les traversées, par rapport à la surface supérieure du support, de sorte que la préparation culinaire ne repose plus sur la surface supérieure du support.

Selon l'invention, le système est également caractérisé en ce qu'il comprend un outil de manutention comprenant des éléments oblongs agencés pour être insérés entre des parties saillantes.

On entend par préparations culinaires toute préparation culinaire solide, pouvant également être molle.

On entend également par préparations culinaires des préparations pouvant être visqueuses et amenées à se solidifier durant une étape de transformation.

De préférence, les préparations culinaires peuvent être à base de pâte.

Les préparations culinaires peuvent être, en outre, des pizzas, des crêpes, des pains, des paninis, des sandwichs, des burgers, des tartes, des gâteaux, des biscuits, des morceaux d'aliments tels que, entre autres, de la viande, des légumes, des féculents, des fruits. Les préparations culinaires peuvent être supportées, ou contenues, par, ou dans, un ou plusieurs supports intermédiaires, tels que, en particulier, un moule, une plaque, un papier de cuisson.

Lorsque le système est en position basse, des extrémités des parties saillantes peuvent affleurer la surface supérieure du support. Dans ce cas, les extrémités des parties saillantes peuvent former avec la surface supérieure une surface quasi-homogène en pouvant rendre les traversées quasi-étanches.

Les traversées peuvent s'étendre entre la surface supérieure et la surface inférieure selon une direction non perpendiculaire à la surface supérieure et/ou à la surface inférieure.

On entend par support, tout type de support pouvant être utilisé lors d'un procédé de transformation d'une préparation culinaire.

Le support pouvant être, en outre, une plaque situé dans un élément frigorifique, une plaque située dans un congélateur, une plaque d'une formeuse, une plaque agencée pour recevoir une préparation dans une station de transformation, par exemple une station de garniture.

On entend par élément oblong, un élément présentant une forme plus longue que large.

Au moins un des éléments oblongs de l'outil de manutention peut être inséré entre des parties saillantes.

L'au moins un des éléments oblongs peut être inséré entre des parties saillantes par :
- la mise en mouvement de l'au moins éléments des éléments oblongs par rapport à des parties saillantes, ou
- la mise en mouvement de l'outil de manutention par rapport à des parties saillantes,
- la mise en mouvement d'au moins une partie saillante par rapport aux éléments oblongs.

Les éléments oblongs peuvent être insérés entre des parties saillantes selon au moins une direction.

L'outil de manutention peut être mis en mouvement de manière contrôlé.

De préférence, l'outil de manutention peut être un dispositif robotisé ou non. Il peut être une simple pelle.

Une extrémité d'une partie saillante peut présenter, en outre, une forme plane, arrondie, conique, tronconique.

L'extrémité de l'au moins une partie saillante peut être portée en saillie par rapport à la surface supérieure du support par :
- la mise en mouvement de l'au moins une partie saillante par rapport au support, ou
- la mise en mouvement du dispositif de transfert par rapport au support, ou
- de la mise en mouvement du support par rapport à l'au moins une partie saillante.

Selon l'invention :
- le dispositif de transfert peut comprendre un réseau de parties saillantes agencées selon un motif,
- le support peut comprendre un réseau de traversées agencées selon un motif complémentaire au motif du réseau de parties saillantes ; lesdits réseaux étant agencés pour que le réseau de parties saillantes puisse être inséré dans le réseau de traversées.

On entend par réseau tout agencement, des parties constituant le réseau, selon un motif de géométrie particulière.

Des extrémités des traversées du réseau de parties saillantes peuvent être portées en saillies, via les traversées, par rapport à la surface supérieure du support, par la mise en mouvement d'au moins une partie saillante, ou de plusieurs parties saillantes ou de l'ensemble des parties saillantes par rapport au support.

Des extrémités des parties saillantes du réseau de parties saillantes peuvent être portées en saillies, via les traversées, par rapport à la surface supérieure du support, par la mise en mouvement du support par rapport au dispositif de transfert.

Selon l'invention, l'outil de manutention peut comprendre un réseau d'éléments oblongs agencés selon un motif complémentaire au motif du réseau de parties saillantes; lesdits réseaux étant agencés pour que le réseau de parties saillantes et le réseau d'éléments oblongs s'interpénètrent.

Le réseau de parties saillantes et le réseau d'éléments oblongs peuvent s'interpénétrer selon au moins une direction.

Selon l'invention, le réseau de parties saillantes peut comprendre un ensemble de sous réseaux, l'ensemble des sous réseaux formant le réseau de parties saillantes ; une partie d'un sous-réseau ou un sous-réseau pouvant appartenir à un ou plusieurs sous-réseaux.

Le réseau de traversées peut comprendre un ensemble de sous réseaux, l'ensemble des sous réseaux formant le réseau de parties saillantes ; une partie d'un sous-réseau ou un sous-réseau pouvant appartenir à un ou plusieurs sous-réseaux.

Le réseau d'éléments oblongs peut comprendre un ensemble de sous réseaux, l'ensemble des sous réseaux formant le réseau de parties saillantes ; une partie d'un sous-réseau ou un sous-réseau pouvant appartenir à un ou plusieurs sous-réseaux.

Selon l'invention, le système peut comprendre un dispositif de guidage caractérisé en ce qu'au moins une traversée est une traversée de guidage présentant un chanfrein du côté de la surface inférieure du support dans laquelle les parties saillantes sont destinées à être insérées.

La traversée de guidage peut appartenir ou non au réseau de traversées.

Selon l'invention, le système peut comprendre un dispositif de guidage caractérisé en ce qu'au moins une partie saillante est une partie saillante de guidage étant agencée pour être insérée dans une traversée et présentant une longueur supérieure aux longueurs des autres parties saillantes.

La partie saillante de guidage peut faire partie ou non du réseau de parties saillantes.

Une longueur d'une partie saillante s'entend comme la distance entre une surface supérieure du dispositif de transfert par rapport à laquelle les parties saillantes sont en saillies, et une extrémité de ladite partie saillante.

Une longueur d'une partie saillante peut être différente d'une longueur d'une autre partie saillante, ou de plusieurs autres parties saillantes ou de toutes les autres parties saillantes.

Les parties saillantes peuvent toutes présenter la même longueur.

La longueur de l'au moins une partie saillante de guidage peut être supérieure de 5 à 50% par rapport à une longueur d'une ou des parties saillantes présentant une longueur supérieure aux longueurs des autres parties saillantes.

Selon l'invention, le système peut comprendre un dispositif de guidage comprenant au moins une partie saillante de guidage présentant un chanfrein.

Le chanfrein de la partie saillante de guidage peut présenter un angle d'arrête identique à l'angle d'arrête du chanfrein de la traversée de guidage.

L'angle d'arrête d'un chanfrein est défini comme l'angle formé entre une face du chanfrein et une direction perpendiculaire à la surface inférieure du support.

Le système selon l'invention peut comprendre un dispositif de guidage interchangeable traversant comprenant :
- au moins une ouverture traversante réalisée dans la face inférieure du support,
- au moins une bague agencée pour être enchâssée, de manière amovible, dans l'au moins une ouverture traversante.

L'au moins une bague peut comprendre un chanfrein.

L'au moins une bague peut être, de préférence, une pièce d'usure.

Selon l'invention l'alliage, ou le matériau, dans laquelle la bague est réalisée peut être, en outre, l'acier trempé.

L'au moins une bague peut être insérée, de préférence, du côté de la face supérieure du support.

Le système selon l'invention peut comprendre un dispositif de guidage interchangeable non traversant comprenant :
- au moins une ouverture non traversante réalisée dans la face inférieure du support,
- au moins une bague agencée pour être enchâssée, de manière amovible, dans l'au moins une ouverture non traversante,
- au moins une partie saillante de guidage rétractable étant agencée pour être insérée dans l'au moins au moins une ouverture non traversante et étant apte à être mise en mouvement relatif par rapport aux autres parties saillantes.

Selon l'invention, le dispositif de transfert peut comprendre un plateau et en ce que la pluralité de parties saillantes est un ensemble de tiges en saillies par rapport à une surface supérieure dudit plateau, le réseau et les sous-réseaux de tiges étant agencés pour former des motifs composés de lignes parallèles entre elles et s'étendant selon au moins une direction parallèle au plan supérieur du plateau.

Le réseau et les sous-réseaux de tiges peuvent être agencés pour former des motifs composés de cercles de diamètres différents.

Les parties saillantes peuvent être en saillies par rapport à la surface supérieure du plateau selon une direction principalement perpendiculaire à la surface supérieure du plateau.

Les parties saillantes peuvent être en saillies par rapport à la surface supérieure du plateau selon une direction oblique par rapport à la surface supérieure du plateau.

Lorsque les motifs du réseau sont composés de cercles, les cercles peuvent être concentriques ou non.

Les motifs du réseau composés de lignes parallèles peuvent s'étendre selon une pluralité de directions différentes parallèles au plan supérieur du plateau.

L'interpénétration du réseau de parties saillantes avec le réseau d'éléments oblongs peut s'effectuer selon l'une quelconque des directions selon lesquelles s'étendent les lignes parallèles.

L'interpénétration du réseau de parties saillantes avec le réseau d'éléments oblongs peut s'effectuer selon une direction parallèle au plan supérieur du plateau ou selon une direction perpendiculaire au plan supérieur du plateau ou selon une direction ayant une composante parallèle et une composante perpendiculaire au plan supérieur du plateau.

Le réseau de parties saillantes peut être inséré dans le réseau de traversée selon une direction perpendiculaire au plan inférieur du support.

Le réseau de parties saillantes peut être inséré dans le réseau de traversée selon une direction ayant une composante parallèle et une composante perpendiculaire au plan inférieur du support.

Une tige peut présenter une épaisseur maximale inférieure d'au moins 2% par rapport à une distance minimale séparant deux parois en vis-à-vis d'une traversée dans laquelle la tige est susceptible d'être insérée.

Selon l'invention, le système peut comprendre un moyen de fixation du dispositif de transfert ou du support, ledit moyen de fixation étant agencé pour conférer au dispositif de transfert ou au support un jeu mécanique dans un plan parallèle au plan dans lequel est comprise la face inférieure du support.

Ledit jeu mécanique peut être conféré au plateau et/ou au support de cuisson.

Ledit jeu mécanique peut présenter une valeur comprise entre 1 et 10% de la taille du support.

Selon l'invention, le système de mise en mouvement relatif peut comprendre :
- au moins un élément fixe,
- au moins un dispositif d'engrenage relié à l'au moins un élément fixe,
- au moins un actionneur agencé pour entrainer l'au moins un dispositif d'engrenage,

et caractérisé en ce que le moyen de fixation du dispositif de transfert ou du support comprend :
- une partie mobile fixée au support ou au dispositif de transfert,
- un élément de liaison fixé au dispositif d'engrenage,
- un dispositif de roulement mécanique relié d'une part à la partie mobile et d'autre part à l'élément de liaison, ledit dispositif d'engrenage étant agencé pour mettre en mouvement relatif la partie mobile par rapport à l'au moins un élément fixe.

Le système de mise en mouvement relatif peut être composé de deux sous-parties agencées pour mettre en mouvement l'ensemble du système par rapport à l'au moins un élément fixe.

Le dispositif d'engrenage peut être tout dispositif d'engrenage connu de l'homme du métier, en outre un dispositif d'engrenage composé d'un pignon et d'une crémaillère.

L'actionneur peut être tout actionneur connu de l'homme du métier, en outre un actionneur à vérin, de préférence à vérin pneumatique.

Selon l'invention, l'outil de manutention peut être une fourche comportant des dents, lesdites dents constituent les éléments oblongs dudit outil de manutention.

Les dents de la fourche peuvent être comprises dans un plan.

La fourche peut être située à une extrémité d'un dispositif de manutention, tel que, en outre, un bras de manutention automatisé.

La fourche et/ou les dents peuvent être articulés vis-à-vis du bras de manutention et peuvent être orientées dans différentes directions.

L'espace séparant deux parois en vis à vis de deux dents consécutives de la fourche peut être, de préférence, supérieure d'au moins 5% par rapport au diamètre d'une tige destinée à être insérée entre lesdites deux dents.

L'espace séparant deux parois de deux tiges en vis-à-vis peut être, de préférence, inférieur d'au moins 5% par rapport à la distance entre deux parois d'une dent destinée à être insérée dans lesdites deux tiges.

L'épaisseur d'une dent étant définie comme la distance maximale entre une paroi supérieure d'une dent de la fourche agencée pour recevoir la pâte, et une paroi inférieure d'une dent de la fourche.

Une épaisseur maximale d'une dent de la fourche peut être, de préférence, inférieure d'au moins 10% par rapport à une distance minimale entre une extrémité d'une tige en saillie par rapport à la surface supérieure du support et la surface supérieure du support.

La fourche à pizza peut également être désignée par le terme pelle à pizza par l'homme du métier.

Selon l'invention, le support peut être un support de cuisson.

Ledit support peut être un élément chauffant connu de l'homme du métier, tel qu'en outre un matériau métallique, en céramique, en polymère, en matériau composite, un alliage.

Ledit support peut être, en outre, une plaque chauffante.

Ledit support peut être un élément réfractaire connu de l'homme du métier, tel qu'en outre un matériau métallique, métalloïde, composite, en oxydes, en carbone, en alliage.

Ledit support peut être, en outre, une plaque réfractaire.

Ledit support peut être, en outre, une pierre réfractaire.

Selon l'invention, le système peut comprendre un dispositif de cuisson, ledit dispositif de cuisson comprenant :
- plusieurs supports de cuisson,
- un axe central agencé pour être mis en rotation,
- des traverses fixées à l'axe central,
- des butées,
- des systèmes de maintien en butée ;
et caractérisé en ce qu'un support de cuisson est agencé pour être posé en appui sur deux traverses adjacentes et en ce qu'un système de maintien en butée exerce une pression constante sur le support de cuisson de manière à maintenir le support de cuisson en pression contre une ou plusieurs butées.

Les traverses peuvent être fixées, à une extrémité proximale, à l'axe central.

L'extrémité proximale d'une traverse s'entend d'une extrémité située du côté de l'axe central.

Les butées peuvent être situées à une extrémité distale des traverses.

Un système de maintien en butée peut être en contact avec l'axe central, positionnés entre deux traverses adjacentes et au contact des dites deux traverses, et exercer une pression constante sur le support de cuisson de manière à maintenir le support de cuisson en pression contre deux butées des traverses sur lesquelles ledit support de cuisson est en appui.

Les traverses peuvent s'étendre selon une direction perpendiculaire à l'axe central.

Les supports de cuisson peuvent être contenus dans un plan perpendiculaire à l'axe central.

Les supports de cuisson peuvent présenter une forme parallélépipédique.

Les supports de cuisson peuvent présenter une géométrie de prisme droit.

La pression exercée par le système de maintien en butée peut être orienté dans une direction perpendiculaire à l'axe central.

La pression exercée par le système de maintien en butée peut être générée par un ressort.

Selon l'invention, le système peut être utilisé dans un four de cuisson, tel qu'un four pour la cuisson des pizzas.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- les FIGURES 1A et 1B sont des représentations schématiques d'une vue en biais d'un support comprenant un réseau de traversées et d'un dispositif de transfert comprenant un plateau et un réseau de parties saillantes.
- la FIGURE 2 est une représentation schématique d'une vue de face d'un four de cuisson comprenant un dispositif de cuisson, un système de mise en mouvement relatif et d'un dispositif de transfert.
- la FIGURE 3 est une représentation schématique d'une vue de profil d'une position basse du système.
- la FIGURE 4 est une représentation schématique d'une vue de profil d'une position haute du système.
- la FIGURE 5 est une représentation schématique d'une vue de côté d'un élément de manutention.
- la FIGURE 6 est une représentation schématique d'une vue de biais d'un support de cuisson et d'une fourche.
- la FIGURE 7 est une représentation schématique d'une vue de biais d'un support de cuisson, d'un dispositif de transfert et d'une fourche située à une extrémité d'un bras de manutention.
- la FIGURE 8 est une représentation schématique d'une vue de biais d'un support de cuisson comprenant un dispositif de guidage interchangeable.
- la FIGURE 9 est une représentation schématique d'une vue de dessus d'un support de cuisson.
- la FIGURE 10 est une représentation schématique d'une vue de biais d'une sous-partie d'un système de mise en mouvement relatif.
- la FIGURE 11 est une représentation schématique d'une vue de biais d'un dispositif de cuisson.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

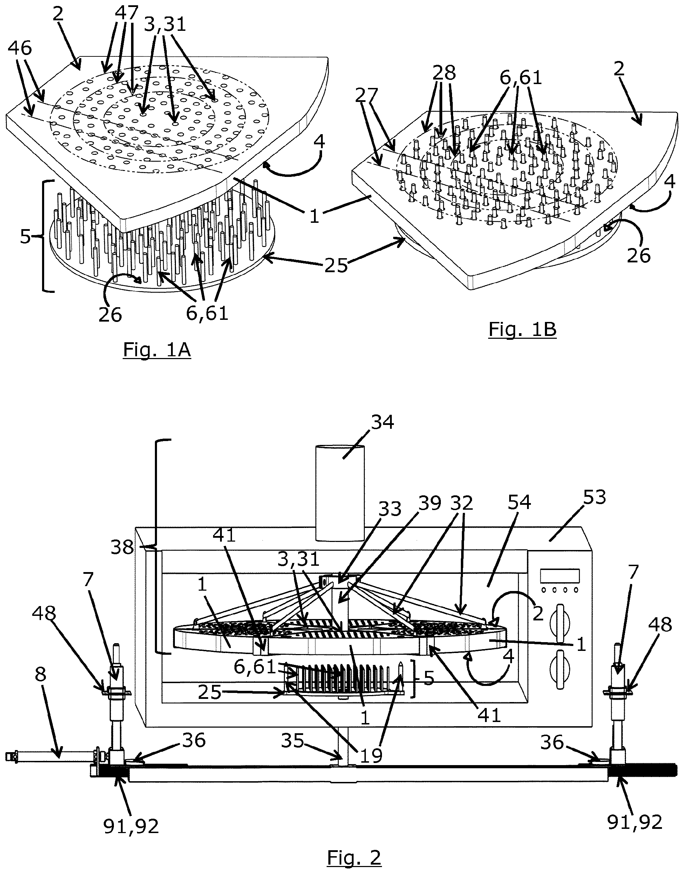

Sur les FIGURES 1A et 1B, on distingue un support 1 comprenant une surface supérieure 2 agencée pour recevoir une préparation culinaire 43 (non représentée), un réseau 31 de traversée 3 s'étendant entre la surface supérieure 2 et une surface inférieure 4. Les traversées 3 présentent, de préférence, une forme cylindrique dont le diamètre est compris entre 1 et 50 mm, de préférence entre 2 et 20 mm, de préférence encore entre 3 et 10 mm, elles présentent un diamètre de 8 mm selon le mode de réalisation. L'épaisseur du support 1 est comprise entre 1 et 500 mm, de préférence entre 10 et 100 mm, de préférence encore entre 15 et 50 mm, elle est de 20 mm selon le mode de réalisation.

On distingue également un dispositif de transfert 5 comprenant un plateau 25 et un réseau 61 de parties saillantes 6 s'étendant à partir d'une surface supérieure 26 dans une direction perpendiculaire audit plateau 25. On remarque également des sous-réseaux de parties saillantes 6 formant des motifs composés de lignes 27 parallèles et de cercles 28 concentriques ayant des diamètres différents. La forme et la géométrie des parties saillantes 6 sont adaptées à la forme et à la géométrie des traversées 3, les parties saillantes 6 et les traversées 3 présentent une géométrie cylindrique selon le mode de réalisation. On observe sur le support 1 des sous-réseaux de parties saillantes 6 formant des motifs composés de lignes 46 et de cercles 47 concentriques ayant des diamètres différents. Les parties saillantes 6 formant les lignes 27 sont complémentaires et aptes à être insérées dans les traversées 3 formant les lignes 46. Les parties saillantes 6 formant les cercles 28 sont complémentaires et aptes à être insérées dans les traversées 3 formant les cercles 47. Les parties saillantes 6 sont, selon le mode de réalisation, des tiges 6 de forme cylindrique. Le diamètre des tiges 6 est inférieur de 0,5 mm au diamètre des traversées 3, de préférence inférieur de 1 mm, de préférence encore de 2 mm, il est inférieur de 3 mm selon le mode de réalisation. Le diamètre des tiges 6 est de 5 mm selon le mode de réalisation. La distance entre deux parois en vis-à-vis de deux tiges 6 voisines est comprise entre 6 et 40 mm, elle est de 15 mm selon le mode de réalisation. La distance entre deux tiges 6 est adaptée à la préparation culinaire (non représentée) 43 destinée à être déposée sur le support 1. Dans le cas des préparations rigides, les tiges 6 peuvent être espacées d'une distance plus grande que dans le cas de préparations souples. La longueur des tiges 6 est adaptée à l'épaisseur du support 1. La longueur des tiges 6 est telle qu'une distance entre des extrémités 13 des tiges portées en saillies et la surface supérieure 2 du support 1 par rapport à laquelle les tiges 6 sont portées en saillies est comprise entre 1-100 mm, de préférence entre 5-50 mm, de préférence encore entre 10-30 mm, elle est de 15 mm selon le mode de réalisation.

Sur la FIGURE 2, on distingue un dispositif de cuisson 38 comprenant des supports 1, un axe central 39, un dispositif de mise en rotation 34, des traverses (non représentées) 40, des butées 41, des ronds de maintien 32, un collier 33 de fixation des ronds de maintien 32. Sur la FIGURE 2 sont représentés six supports 1. Le dispositif de mise en rotation 34 est de préférence positionné à l'extérieur de l'enceinte 54 de cuisson du four 53. Un dissipateur en aluminium peut être installé entre l'axe central 39 et le dispositif de mise en rotation 34 pour diminuer efficacement la température au voisinage dudit dispositif 34. Les ronds de maintien 32 sont fixés à une extrémité au collier 33 de fixation des ronds de maintien 32 et à l'autre extrémité à une traverse 40. Lesdits ronds de maintien 32 sont composées de deux parties (non représentées) séparées par un élément intermédiaire (non représenté) permettant d'ajusté la distance entre le collier 33 de fixation et l'extrémité d'un rond de maintien 32 fixée à une traverse 40. Cet ajustement, réalisé de préférence à froid, permet de régler l'angle entre les traverses 40 et l'axe central 39, et donc entre les supports 1 et l'axe central 39. Les ronds de maintien 32 présentent un diamètre compris entre 2 et 20mm, de préférence entre 3 et 15 mm, de préférence encore entre 4 et 10 mm, ils présentent un diamètre de 6 mm selon le mode réalisation.

On distingue également un dispositif de transfert 5 comportant un réseau 61 de tiges 6 s'étendant à partir d'un plateau 25 et selon une direction perpendiculaire audit plateau 25, et deux parties saillantes de guidage (décrit ultérieurement) 19.

On distingue également un système de mise en mouvement relatif comprenant deux éléments fixes 48 et est composé de deux sous-parties, chacun des éléments fixes 48 étant fixé à une des deux sous-parties du système de mise en mouvement relatif. Le système de mise en mouvement relatif comprend également un dispositif d'engrenage 91,92,93, un actionneur 8, un axe de guidage 7, un roulement mécanique 36 et un élément mobile 35. Chacune des sous-parties est positionnée de part et d'autre du four 53 de cuisson de manière à conférer une meilleure stabilité, une meilleure précision, une meilleure durée de vie au système de mise en mouvement relatif et de réduire l'encombrement en dessous du four. Le système de mise en mouvement relatif est positionné à l'extérieur du four 53 de manière à ne pas exposer les éléments du système à des températures élevées. Selon le mode de réalisation, l'ensemble du système de mise en mouvement relatif est mis en mouvement de translation vertical, c'est-à-dire selon une direction parallèle à l'axe central 39, par rapport aux éléments fixes 48 et donc par rapport au four 53. Selon le mode de réalisation, le système de mise en mouvement relatif est agencé pour mettre en mouvement de translation le dispositif de transfert 5 par l'intermédiaire de l'élément mobile 35.

Selon le mode de réalisation, le dispositif de mise en rotation 34 peut être mis en rotation autour de l'axe central 39 mais ne peut être mis mouvement de translation dans aucune direction. Le dispositif de mise en rotation 34 est apte à déplacer, lors d'un mouvement de rotation, chacun des supports 1 au-dessus du dispositif de transfert 5, de sorte que lors de la mise en mouvement de translation du dispositif de transfert 5, au moins une partie du réseau 61 de parties saillantes 6 puisse être insérée dans au moins une partie du réseau 31 de traversées 3.

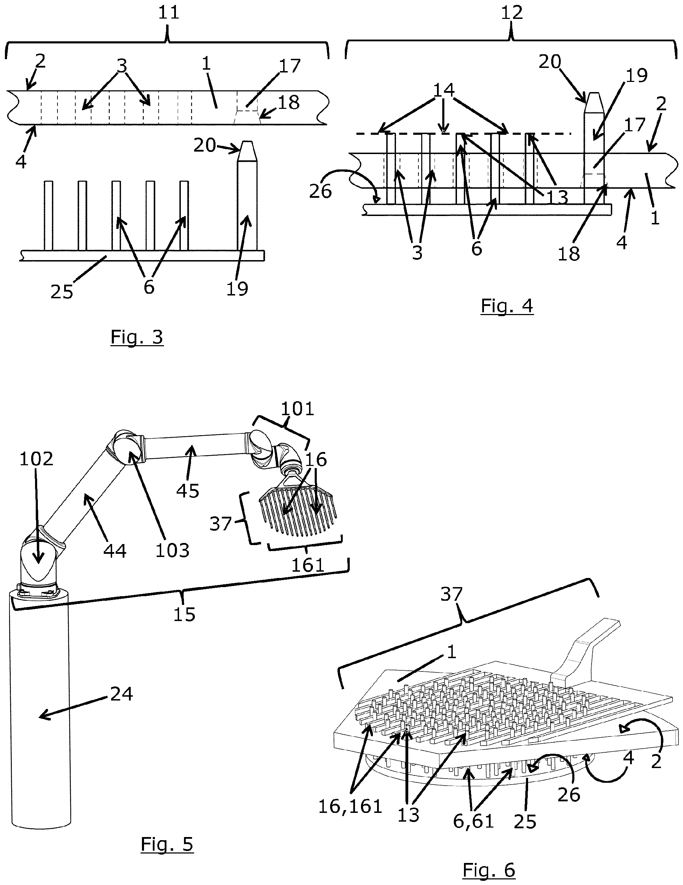

Sur les vues de profil schématisées sur la FIGURE 3 et 4 sont illustrées, respectivement une position basse 11 et une position haute 12 du système dans laquelle on distingue un support 1 comprenant une surface supérieure 2 et inférieure 4, une traversée de guidage 7 comprenant un chanfrein 18 du côté de la surface inférieure 4, des traversées 3 ; un dispositif de transfert comprenant un plateau 25 présentant une surface supérieure 26, une partie saillante de guidage 19 présentant un chanfrein 20 en son extrémité et des parties saillantes 6. La traversée de guidage 17 et la partie saillante de guidage 19 formant un dispositif de guidage. L'ouverture de la traversée de guidage 17 du côté de la face inférieure 4 du support 1 est, de préférence, de forme oblongue.

En position basse 11 du système, aucune partie saillante 6,19 n'est en saillie par rapport à la surface supérieure 2 du support 1. Dans le mode de réalisation présenté, aucune partie saillante 6,19 n'est insérée dans une traversée 3,18 lorsque le système est en position basse 11.

En position haute 12 du système, une extrémité 13 des parties saillantes 6, 19 est portée en saillie par rapport à la surface supérieure 2 du support 1. Dans ce cas, les extrémités 13 des parties saillantes 6, 19 portées en saillies par rapport à la surface supérieure 2 du support 1 forment ensemble une surface surélevée 14 par rapport à la surface supérieure 2 du support 1. La surface surélevée 14 ainsi formée est apte à recevoir une préparation culinaire 43. La surface surélevée 14 ainsi formée est, de préférence, parallèle à la surface supérieure 2 du support 1.

Sur la FIGURE 5 est représenté une vue schématique de profil d'un bras 15 de manutention relié à une extrémité à un socle 24 agencé pour mettre en mouvement le bras 15 de manutention et relié à une autre extrémité à une fourche 37 comprenant un réseau 161 d'éléments oblongs 16. Selon le mode de réalisation, les éléments oblongs 16 sont des dents 16 formant un réseau 161. Une articulation 101 reliant le bras 15 à la fourche 37 permet d'orientée le réseau 161 de dents 16 dans différentes directions. Une autre articulation 102 relie le bras 15 au socle 24 et permet d'orienter le bras 15 dans différentes directions. Une dernière articulation 103 est située entre une première partie 44 et une partie terminale 45 du bras 15 de manutention. Les articulations 101, 102, 103 permettent de positionner le réseau 161 de dents 16 dans un plan quelconque.

Sur la FIGURE 6, on distingue une représentation schématique vue de biais de la face supérieure 2 d'un support 1, une fourche 37 comprenant des dents 16 formant un réseau 161 interpénétrant des extrémités 13 de parties saillantes 6 constituées de tiges 6 portées en saillies par rapport à la surface supérieure 2 du support 1. L'espace séparant deux parois en vis à vis de deux dents 16 consécutives de la fourche 37 est supérieure de 1mm, de préférence de 2mm, de préférence encore de 4 mm par rapport au diamètre d'une tige 6 destinée à être insérée entre lesdites deux dents 16. Un bras de manutention (non représenté) sur l'extrémité duquel est située la fourche 37 est agencé pour que le réseau de dents 161 et la partie des tiges 6 comprise entre les extrémités 13 des tiges 6 en saillies et la surface supérieure 2 du support 1 s'interpénètrent lors d'un mouvement du bras 15 et/ou de la fourche 37 selon :
- une direction perpendiculaire à la surface supérieure 2 du support 1, ou
- une direction parallèle à la surface supérieure 2 du support 1, ou
- une direction ayant une composante perpendiculaire et une composante parallèle à la surface supérieure 2 du support 1. Le réseau de dents 161 de la fourche 37 est agencé pour former une surface apte à recevoir une préparation culinaire 43.

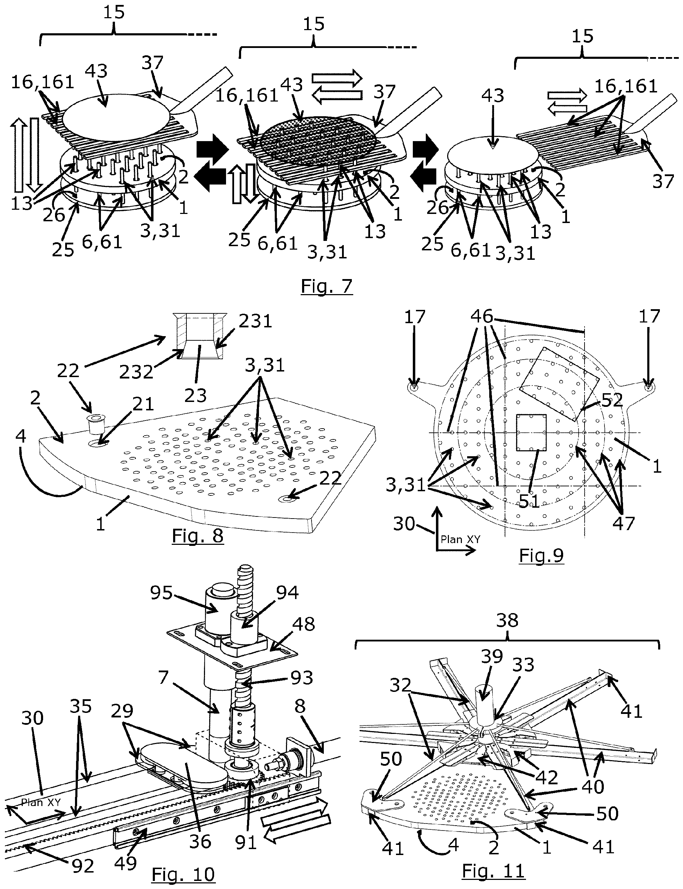

Sur les FIGURE 7, on distingue une représentation schématique en vue de biais de la surface supérieure 2 d'un support 1 comportant un réseau 31 de traversées 3 ; d'un dispositif de transfert comportant un réseau 61 de tiges 6 s'étendant à partir d'une surface supérieure 26 (non visible) d'un plateau 25, le système étant positionné en position haute 12, et une fourche 37 comprenant un réseau 161 de dents 16.

Le transfert d'une préparation culinaire 43 à partir de la fourche 37 vers la surface supérieure 2 du support 1 peut être découpé en trois étapes.

Une première étape consiste à transférer la préparation culinaire 43 à partir de la surface formée par le réseau 161 de dents 16 de la fourche 37 vers la surface surélevée 14 (non représentée) formée par les extrémités 13 du réseau 61 de tiges 6 portées en saillies par rapport à la surface supérieure 2 du support 1. Ce transfert peut être réalisé lorsque le système est initialement en position haute 12 ou basse 11. Lorsque le système est initialement en position basse 11, cette première étape peut être réalisée lors :
- d'un mouvement du bras 15 (non représenté dans son intégralité) dans une direction perpendiculaire ou parallèle ou selon une direction ayant une composante parallèle et une composante perpendiculaire à la surface supérieure 2 du support 1 et orientée vers le support 1 de manière à positionner le réseau 161 de dents 16 de la fourche 37 dans un plan situé entre la surface supérieure 2 du support 1 et la surface surélevée 14 formée par les extrémités 13 du réseau 61 de tiges 6 portées en saillies par rapport à la surface supérieure 2 du support 1, suivi par le passage du système d'une position basse 11 vers une position haute 12. Lors du passage du système d'une position basse 11 vers une position haute 12, les extrémités 13 des tiges 6 :
- sont portées en saillies par rapport à la surface supérieure 2 du support 1, puis
- interpénètrent les dents 16 de la fourche 37,
- entre en contact avec une surface inférieure de la préparation culinaire 43 afin que la préparation culinaire 43 soit transférée de la surface formée par le réseau 161 de dents 16 vers la surface surélevée 14,
- surélèves la préparation culinaire 43 par rapport à la surface formée par le réseau 161 de dents 16 vers la surface surélevée 14.

Lorsque le système est initialement en position haute 12, cette première étape (non représenté) peut être réalisée lors :
- d'un mouvement du bras 15 dans une direction perpendiculaire ou selon une direction ayant une composante parallèle et une composante perpendiculaire par rapport à la surface supérieure 2 du support 1 et orientée vers le support 1 de manière à transférer la préparation culinaire 43 à partir de la surface formée par le réseau 161 de dents 16 de la fourche 37 vers la surface surélevée 14 formée par les extrémités 13 du réseau 61 de tiges 6 en saillies par rapport à la surface supérieure 2 du support 1. Lors de ce mouvement, les dents 16 de la fourche 37 interpénètrent les extrémités 13 des tiges 6 portées en saillies et se trouvent alors dans un plan situé entre la surface supérieure 2 du support 1 et la surface surélevée 14 formée par les extrémités 13 des tiges 6 en saillies par rapport à la surface supérieure 2 du support 1.

Une deuxième étape consiste à retirer le réseau 161 de dents 16 de la fourche 37 du réseau 61 formé par les extrémités 13 des tiges 6 portées en saillies par rapport à la surface supérieure 2 du support 1 lors d'un mouvement du bras de manutention 15 dans une direction parallèle à la surface supérieure 2 du support et/ou parrallèle aux dents 16 de la fourche 37.

Une troisième étape consiste à porter le système d'une position haute 12 vers une position basse 11 de manière à transférer la préparation 43 à partir de la surface surélevée 14 formée par les extrémités 13 du réseau 61 de tiges 6 portées en saillies vers la surface supérieure 2 du support 1.

Le transfert d'une préparation culinaire 43 à partir de la surface supérieure 2 du support 1 vers la surface formée par le réseau 161 de dents 16 de la fourche 37 peut être découpé en trois étapes.

Une première étape consiste à porter le système d'une position basse 11 vers une position haute 12 de manière à transférer la préparation culinaire 43 de la surface supérieure 2 du support 1 vers la surface surélevée 14 formée par les extrémités 13 du réseau 61 de tiges 6 portées en saillies par rapport à la surface supérieure 2 du support 1.

Une deuxième étape consiste à insérer le réseau 161 de dents 16 de la fourche 37 dans le réseau 61 formé par les extrémités 13 des tiges 6 portées en saillies par rapport à la surface supérieure 2 du support 1 lors d'un mouvement du bras 15 dans une direction parallèle à la surface supérieure 2 du support 1. Le réseau 161 de dents 16 de la fourche 37 se trouvent alors dans un plan situé entre la surface supérieure 2 du support 1 et la surface surélevée 14 formée par les extrémités 13 du réseau 61 de tiges 6 portées en saillies par rapport à la surface supérieure 2 du support 1.

Une troisième étape consiste à transférer la préparation culinaire 43 à partir la surface surélevée 14 formée par les extrémités 13 du réseau 61 de tiges 6 portées en saillies par rapport à la surface supérieure 2 du support 1 vers la surface formée par le réseau 161 de dents 16 de la fourche 37 lors
- d'un mouvement du bras 15 dans une direction perpendiculaire ou selon une direction ayant une composante parallèle et une composante perpendiculaire par rapport à la surface supérieure 2 du support 1, ou
- du passage du système à partir d'une position haute 12 vers une position basse 11.

Lors de l'étape de transfert de la préparation culinaire 43 de la face supérieure 2 du support 1 vers la surface surélevée 14 formée par les extrémités 13 du réseau 61 de tiges 6 portées en saillies par rapport à la surface supérieure 2 du support 1, la force maximale exercée par le système de mise en mouvement est de 1000 Newton (N), de préférence 500 N, de préférence encore 200 N, elle est de 150 N selon le mode de réalisation.

Sur la FIGURE 8 est illustré une représentation schématique d'une vue de biais d'une face supérieure 2 d'un support 1 comprenant un réseau 31 de traversées 3 et une ouverture traversante 21 qui, selon le mode de réalisation ne fait pas partie du réseau 31 de traversées 3. On distingue également une bague 22 qui, selon le mode de réalisation, est agencée pour être enchâssée du côté de la face supérieure 2 dans le support 1. La bague 22 présente également un chanfrein 23 dont les faces 231, 232 s'étendent à partir de l'ouverture de la bague 22 destinée à être positionnée du côté de la face inférieure 4 du support 1 dans laquelle les parties saillantes 6 du dispositif de transfert 5 sont insérées ou destinées à être insérées. La bague 22 présente du côté de la face inférieure 4 du support 1, une ouverture de forme oblongue. L'angle d'arrête du chanfrein 23 peut être compris entre 5 et 45°, de préférence entre 8 et 40°, de préférence encore entre 10 et 30°, l'angle d'arrête est de 15° selon le mode de réalisation.

La vue de dessus d'un support 1 schématisée sur la FIGURE 9 illustre un réseau 31 de traversées 3 et deux traversées de guidage 17 qui, selon le mode de réalisation, ne font pas parties du réseau 31. L'agencement particulier du réseau 31 de traversées 3, selon le mode de réalisation, comprend des sous-réseaux de traversées présentant des motifs tels que, en outre, des lignes 46, des cercles 47, des carrés 51, des rectangles 52. On distingue des sous-réseaux de traversées 3 formés par des motifs de lignes 46 et de cercles 47 étant respectivement complémentaires des sous-réseaux (non représentés) de tiges 6 formant des motifs (non représentés) de lignes 27 et de cercles 28. Deux directions selon lesquelles s'étendent les motifs de lignes 46 et deux motifs de cercles 47 concentriques de diamètres différents sont représentés.

On compte selon la direction x du plan 30, quinze lignes 46. Ces lignes 46 sont agencées pour coopérer avec seize dents 16 d'une fourche 37, quatorze desdites dents étant agencées pour être insérées entre deux lignes 46 consécutives et deux dents supplémentaires étant situées sur chaque bord du réseau 161 de dents 16. En outre, on compte trois cercles 28 concentriques ayant des diamètres de 160, 240 et 300 mm. A titre d'exemple, les traversées 3 constituant le cercle 28 de diamètre de 240 mm forment un sous-réseau adapté pour recevoir des préparations culinaires 43 ayant un diamètre voisin de 240 mm. Les traversées formant le cercle de diamètre de 160 mm forment un sous-réseau adapté pour recevoir des préparations culinaires 43 ayant un diamètre voisin de 160 mm ; ledit sous-réseau appartenant au sous-réseau de traversées formant un cercle de diamètre de 240 mm. Ainsi, le réseau 31 de traversées 3 compte deux sous-réseaux ayant des motifs circulaires et étant agencés pour recevoir des préparations alimentaires, de préférence circulaires, ayant des diamètres compris entre 160 et 300 mm.

On remarque que les deux traversées de guidage 17 sont positionnées sur deux ergots positionnés de manière symétrique et situés hors du réseau 31 de traversées 3. Les traversées de guidage 17 n'étant pas compris dans le réseau 31 de traversées 3, il est possible d'utiliser un dispositif de guidage comprenant une partie saillante de guidage 19 qui n'est pas rétractable.

La vue de biais d'une des deux sous-parties d'un système de mise en mouvement relatif est illustrée sur la FIGURE 10. Chacune des deux sous-parties du système de mise en mouvement relatif comporte les mêmes éléments agencés de manière identique, à l'exception d'un vérin 8 qui est connecté uniquement à une des sous-parties. La sous-partie illustrée sur la FIGURE 10 comprend un vérin pneumatique 8 agencé pour entrainer un dispositif d'engrenage 91,92,93. Ledit vérin pneumatique 8 met en translation une crémaillère 92 dans un rail 49. La crémaillère 92 actionne un pignon 91, ledit pignon entraine une vis d'entrainement 93 de manière à transformer le mouvement de translation horizontal de la crémaillère 92 en mouvement de translation vertical de l'ensemble du système de mise en mouvement relatif par rapport à l'élément fixe 48. On distingue un élément de liaison 29 sur lequel est fixé d'une part un dispositif de roulement mécanique 36 et d'autre part un ensemble comprenant, en outre, le pignon 91, un tube creux 94, présentant un filetage complémentaire au filetage de la vis d'entrainement 93, fixé à l'élément fixe 48 et un axe de guidage 7 agencés pour guider le mouvement vertical du système de mise en mouvement relativement à l'élément fixe 48. Le dispositif d'engrenage 91,92,93 est agencé pour opérer un rapport de réduction entre la course du vérin 8 et la course du système de mise en mouvement relatif. L'axe de guidage 7 coulisse dans un cylindre creux 95, ledit cylindre creux est fixé à l'élément fixe 48. L'élément de liaison 29, selon le mode de réalisation, est une entretoise 29 fixée aux deux éléments mobiles 35 qui constituent, selon le mode de réalisation, l'élément mobile 35. L'axe de guidage 7 de chacune des deux sous-parties du système de mise en mouvement relatif, sont chacun reliés à un élément fixe 48 par l'intermédiaire d'un dispositif d'ajustement (non représenté), permettant de régler la position du système de mise en mouvement relatif dans son entier, dans le plan 30, par rapport aux éléments fixes 48. Selon le mode de réalisation, les éléments mobiles 35 sont reliés au dispositif de transfert 5, le réglage du dispositif d'ajustement permet de régler la position du dispositif de transfert 5 dans le plan 30 et ainsi d'ajuster l'alignement du réseau 61 de parties saillantes 6 par rapport au réseau 31 de traversées 3.

Le dispositif de roulement mécanique 36, relié à un élément mobile 35, permet de conférer audit élément mobile 35 un jeu mécanique dans le plan 30. Le jeu mécanique conféré à l'élément mobile est compris entre 1 et 20mm, de préférence entre 3 et 15 mm, de préférence encore entre 4 et 8 mm, il est de 6 mm selon le mode de réalisation.

La crémaillère 92 s'étend de la sous-partie représentée sur la FIGURE 10, appelée première sous-partie, à une deuxième sous-partie (non représentée) du système de mise en mouvement relatif. La première sous-partie du système de mise en mouvement relatif représentée sur la FIGURE 10 comprend une première extrémité de la crémaillère 92 et la deuxième sous partie comprend une deuxième extrémité de ladite crémaillère 92. Le système de mise en mouvement relatif ne comportant qu'un vérin 8, le mouvement de translation de la crémaillère 92 est transmis par la crémaillère 92, à la deuxième sous-partie (non représentée) du système de mise en mouvement relatif.

Sur la FIGURE 11 est illustré une représentation schématique d'une vue de biais d'un dispositif de cuisson 38. Ce dispositif de cuisson 38 est particulièrement adapté pour être intégré dans une enceinte 54 d'un four 53 de cuisson, en particulier dans un four 53 de cuisson à pizza. Afin d'homogénéiser la cuisson et d'en améliorer la qualité, les supports 1 utilisés dans ledit four 53 seront de préférence des pierres réfractaires.

On distingue un axe central 39, relié à un dispositif de mise en rotation (non représenté) 34, sur lequel est fixé, par une première extrémité, six traverses 40 s'étendant dans un plan perpendiculaire à l'axe central 39. Une deuxième extrémité de chaque traverse 40 comprend une butée 41. On distingue également entre deux traverses 40 adjacentes, un système de maintien en butée 42, chaque système de maintien en butée 42 est fixé à l'axe central 39 et en contact avec lesdites deux traverses 40.

Sur la FIGURE 11, un support 1 de cuisson est posé en appui sur deux traverses 40 adjacentes, le support est maintenu en pression contre les deux butées 41 situées aux extrémités des traverses 40 adjacentes sur lesquelles il repose. Le dispositif de cuisson peut contenir six supports 1 de cuisson. Le maintien en pression du support 1 est assuré par le système de maintien en butée 42 qui exerce une pression selon une direction comprenant une médiane située à équidistance desdites deux traverses 40 adjacentes, s'étendant à partir de l'axe central 39 et comprise dans le plan reliant lesdites traverses adjacentes 40. Ce système de maintien en butée 42 permet de pallier aux décalages engendrés par les effets de dilatation thermiques dus aux différences entre les coefficients de dilatation thermiques du support 1 et des éléments métalliques, tels qu'entres autres, les traverses 40. Ce système permet de conserver une précision de positionnement de ± 0,5 mm des supports 1 de cuisson lors du passage de la température ambiante à la température de cuisson et inversement.

On distingue également sur la FIGURE 11, un collier 33 de fixation des ronds de maintien 32 fixé sur l'axe central 39 et situé en amont de la surface supérieure 2 du support 1 selon une direction s'étendant entre la surface supérieure 2 et la surface inférieure 4 du support 1. Le collier 33 de fixation comprend, de préférence, deux bagues ayant la forme d'un demi-cylindre et agencées pour être enserrées, face à face, sur l'axe central 39. On distingue des ronds de maintien 32, chaque rond de maintien 32 s'étendant entre le collier 33 de fixation des ronds de maintien et une traverse 40. Chaque rond de maintien 32 est composé de deux parties (non représentées) entre lesquelles se trouve un élément intermédiaire (non représenté) permettant d'ajuster la longueur du rond de maintien 32 et donc la distance entre le collier 33 et une traverse 40 et par conséquent l'angle entre ladite traverse 40 et l'axe central 39. De ce fait, en ajustant deux ronds de maintien 32 reliés aux deux traverses, il est possible d'ajuster l'angle entre ledit support de cuisson 1 et l'axe central 39. Ainsi, en procédant à un ajustement à froid de l'angle entre un support 1 de cuisson et l'axe central 39, il est possible d'anticiper les variations dudit angle, dues aux dilatations thermiques des éléments du dispositif de cuisson lorsque le four 53 est en fonctionnement, lorsque le four 53 est en fonctionnement. Des cales de maintiens 50 sont agencées pour maintenir le support de cuisson 1 en appui contre les deux traverses 40 adjacentes sur lesquelles il est posé.

Bien sûr, l'invention n'est pas limitée aux exemples qui viennent d'être décrits et de nombreux aménagements peuvent être apportés à ces exemples sans sortir du cadre de l'invention.

Ainsi, dans des variantes combinables entre elles des modes de réalisation précédemment décrits :
- un dispositif d'engrenage peut être intégré dans le plateau 25 du dispositif de transfert 5 et agencé pour mettre en mouvement les tiges 6 par rapport au plateau 5,
- en position basse 11, des tiges 6 sont insérées en permanence dans les traversées 3 du support 1 et affleurent la surface supérieure 2 du support 1,
- une ouverture 21, traversante ou non, du dispositif de guidage, peut faire partie du réseau 31 de traversées 3,
- une traversée de guidage 17 peut faire partie du réseau 31 de traversées 3,
- une partie saillante de guidage 19 peut faire partie du réseau 61 de parties saillantes 6,
- une bague 22 peut comporter un filet complémentaire d'un taraudage réalisé dans l'ouverture 21 de manière à être insérée dans le support 1 par vissage,
- les motifs des sous-réseaux sont adaptés à la géométrie des préparations culinaires 43,
- les éléments du dispositif de cuisson 38 sont, de préférence, des éléments en acier, de préférence encore en acier inoxydable,,
- la pression exercée par le système maintien en butée 42 peut être assuré par un ressort, de préférence réalisé dans un matériau connu de l'homme du métier pour ses propriétés thermiques, en particulier un alliage comprenant du nickel et du chrome, de préférence le ressort peut comprendre de l'inconel,
- les parties saillantes 6 peuvent de préférence être réalisées en acier inoxydable,
- le réseau ou les sous-réseaux de dents 16 peuvent être adaptés pour recevoir, simultanément ou consécutivement, des préparations culinaires de différents types, de différentes géométries et de différentes tailles,
- lorsque seulement une partie des sous-réseaux de parties saillantes 6 est en saillie par rapport à la surface supérieure 2 du support 1, lesdits sous-réseaux peuvent être agencés de manière à former plusieurs surfaces surélevées 14, la géométrie d'une des surfaces surélevées 14 peut être différente d'une géométrie d'une autre surface surélevée 14 ou des géométries de plusieurs autres surface surélevées 14 ou des géométries de toutes les autres surfaces surélevées 14,
- lorsque seulement une partie des sous-réseaux de parties saillantes 6 est en saillie par rapport à la surface supérieure 2 du support 1, la distance entre la surface supérieure 2 du support 1 et la surface surélevée 14 formée par un des sous-réseaux de parties saillantes 6 en saillies peut être différente de la distance entre la surface supérieure 2 du support 1 et une autre surface surélevée 14 formé par un autre des sous-réseaux de partie saillantes 6 en saillies,
- lorsque seulement une partie des sous-réseaux de parties saillantes 6 est en saillie par rapport à la surface supérieure 2 du support 1, la distance entre la surface supérieure 2 du support 1 et la surface surélevée 14 formée par un des sous-réseaux de parties saillantes 6 en sailli peut être différente de la ou des distances entre la surface supérieure 2 du support 1 et plusieurs autres surfaces surélevées 14 formées par plusieurs autres des sous-réseaux de partie saillantes 6 en saillis,
- lorsque seulement une partie des sous-réseaux de parties saillantes 6 est en sailli par rapport à la surface supérieure 2 du support 1, la distance entre la surface supérieure 2 du support 1 et une surface surélevée 14 formée par un des sous-réseaux de parties saillantes 6 en sailli peut être différente de la ou des distances entre la surface supérieure 2 du support 1 et toutes les autres surface surélevées 14 formées par tous les autres sous-réseaux de parties saillantes 6 en saillis,
- l'élément mobile 35 peut être relié au dispositif de transfert 5 ou au support 1, la partie (5 ou 1) non reliée au dispositif de transfert 5 est de préférence immobile lors de la mise en mouvement du système de mise en mouvement, le réglage du dispositif d'ajustement permet de régler la position du dispositif de transfert 5 ou du support 1 dans le plan 30 et ainsi d'ajuster l'alignement du réseau 61 de parties saillantes 6 par rapport au réseau 31 de traversées 3,
- l'élément mobile 35 peut être relié au dispositif de transfert 5 ou au support 1, la partie (5 ou 1) non reliée au dispositif de transfert 5 est de préférence immobile lors de la mise en mouvement du système de mise en mouvement,
- une partie saillante de guidage 19 peut être rétractable automatiquement,
- une partie saillante de guidage 19 peut être rétractable lorsqu'elle rencontre une force s'exerçant dans une direction inverse à son déplacement, la valeur de la force provoquant la rétractation peut être prédéterminée,
- une partie saillante de guidage 19 peut être rétractable lorsqu'elle rencontre une force s'exerçant selon une direction parallèle à la direction reliant la surface supérieure 2 et la surface inférieure 4 du support 1, la valeur de la force provoquant la rétractation peut être prédéterminée,
- une partie saillante 6 peut être rétractable automatiquement,
- une partie saillante 6 peut être rétractable lorsqu'elle rencontre une force s'exerçant dans une direction inverse à son déplacement, la valeur de la force provoquant la rétractation peut être prédéterminée,
- une partie saillante 6 peut être rétractable lorsqu'elle rencontre une force s'exerçant selon une direction parallèle à la direction reliant la surface supérieure 2 et la surface inférieure 4 du support 1, la valeur de la force provoquant la rétractation peut être prédéterminée,
- la surface supérieure 2 et/ou la surface inférieure 4 du support 1 n'est pas plane mais présente, par exemple, des cannelures et/ou des aspérités et/ou des rainures,
- la surface supérieure 26 du plateau 25 n'est pas plane mais présente, par exemple, des cannelures et/ou des aspérités et/ou des rainures.

De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Système de manutention de préparations culinaires comprenant :
- un support (1) comprenant :
• une surface supérieure (2) agencée pour recevoir une préparation culinaire (43), et
• une pluralité de traversées (3) s'étendant entre la surface supérieure et une surface inférieure (4),
- un dispositif de transfert (5) comprenant une pluralité de parties saillantes (6),
- un système de mise en mouvement relatif (7, 8, 9, 29, 35, 36, 48, 93) du support par rapport à au moins une partie du dispositif de transfert,
ledit système étant **caractérisé en ce que** le système de mise en mouvement relatif est agencé pour positionner le système dans :
• une position basse (11), dans laquelle aucune partie saillante n'est en saillie par rapport à la surface supérieure du support,
• une position haute (12), dans laquelle une extrémité (13) d'au moins une partie saillante est portée en saillie, via les traversées, par rapport à la surface supérieure du support, de sorte que la préparation culinaire ne repose plus sur la surface supérieure du support ;
et **en ce qu'**il comprend un outil de manutention (37) comprenant des éléments oblongs (16) agencés pour être insérés entre des parties saillantes.

2. Système selon la revendication 1, **caractérisé en ce que** :
- le dispositif de transfert (5) comprend un réseau de parties saillantes (61) agencées selon un motif,
- le support (1) comprend un réseau de traversées (31) agencées selon un motif complémentaire au motif du réseau de parties saillantes ;
lesdits réseaux étant agencés pour que le réseau de parties saillantes puisse être inséré dans le réseau de traversées.

3. Système selon la revendication 1 ou 2, **caractérisé en ce que** l'outil de manutention (37) comprend un réseau d'éléments oblongs (161) agencés selon un motif complémentaire au motif du réseau de parties saillantes (61);
lesdits réseaux étant agencés pour que le réseau de parties saillantes et le réseau d'éléments oblongs s'interpénètrent.

4. Système selon la revendication 2 ou 3, **caractérisé en ce que** le réseau de parties saillantes (61) comprend un ensemble de sous réseaux, l'ensemble des sous réseaux formant le réseau de parties saillantes ; une partie d'un sous-réseau ou un sous-réseau pouvant appartenir à un ou plusieurs sous-réseaux.

5. Système selon l'une quelconque des revendications précédentes, comprenant un dispositif de guidage (17, 18) **caractérisé en ce qu'**au moins une traversée (3) est une traversée de guidage (17) présentant un chanfrein (18) du côté de la surface inférieure (4) du support dans laquelle les parties saillantes (6) sont destinées à être insérées.

6. Système selon l'une quelconque des revendications précédentes, comprenant un dispositif de guidage (17, 18, 19) **caractérisé en ce qu'**au moins une partie saillante (6) est une partie saillante de guidage (19) étant agencée pour être insérée dans une traversée (3, 17) et présentant une longueur supérieure aux longueurs des autres parties saillantes.

7. Système selon l'une quelconque des revendications précédentes, **caractérisé en ce qu'**il comprend un dispositif de guidage (17, 18, 19, 20) comprenant au moins une partie saillante de guidage (19) présentant un chanfrein (20).

8. Système selon l'une quelconque des revendications précédentes, **caractérisé en ce qu'**il comprend un dispositif de guidage interchangeable (21, 22) traversant comprenant :
- au moins une ouverture (21) traversante réalisée dans la face inférieure (4) du support (1),
- au moins une bague (22) agencée pour être enchâssée, de manière amovible, dans l'au moins une ouverture traversante.

9. Système selon l'une quelconque des revendications 1 à 7, **caractérisé en ce qu'**il comprend un dispositif de guidage interchangeable non traversant comprenant :
- au moins une ouverture non traversante réalisée dans la face inférieure (4) du support (1),
- au moins une bague agencée pour être enchâssée, de manière amovible, dans l'au moins une ouverture non traversante,
- au moins une partie saillante de guidage rétractable étant agencée pour être insérée dans l'au moins au moins une ouverture non traversante et étant apte à être mise en mouvement relatif par rapport aux autres parties saillantes (6).

10. Système selon l'une des revendications 2 à 9, **caractérisé en ce que** le dispositif de transfert comprend un plateau (25) et **en ce que** la pluralité de parties saillantes (6) est un ensemble de tiges (61) en saillies par rapport à une surface supérieure (26) dudit plateau, le réseau (61) et les sous-réseaux de tiges étant agencés pour former des motifs composés de lignes (27) parallèles entre elles et s'étendant selon au moins une direction parallèle au plan supérieur du plateau.

11. Système selon l'une des revendications 2 à 10, **caractérisé en ce que** le réseau (61) et les sous-réseaux de tiges sont agencés pour former des motifs composés de cercles (28) de diamètres différents.

12. Système selon l'une quelconque des revendications précédentes, **caractérisé en ce qu'**il comprend un moyen de fixation du dispositif de transfert (5) ou du support (1), ledit moyen de fixation étant agencé pour conférer au dispositif de transfert ou au support un jeu mécanique dans un plan parallèle au plan (30) dans lequel est comprise la face inférieure (4) du support.

13. Système selon l'une quelconque des revendications précédentes, **caractérisé en ce que** le système de mise en mouvement relatif comprend :
- au moins un élément fixe (48),
- au moins un dispositif d'engrenage (91,92,93) relié à l'au moins un élément fixe,
- au moins un actionneur (8) agencé pour entrainer le dispositif d'engrenage,
et **caractérisé en ce que** le moyen de fixation du dispositif de transfert (5) ou du support (1) comprend :
- une partie mobile (35) fixée au support ou au dispositif de transfert,
- un élément de liaison (29) fixé au dispositif d'engrenage,
- un dispositif de roulement mécanique (36) relié d'une part à la partie mobile et d'autre part à l'élément de liaison, ledit dispositif d'engrenage étant agencé pour mettre en mouvement relatif la partie mobile par rapport à l'au moins un élément fixe.

14. Système selon l'une quelconque des revendications précédentes, **caractérisé en ce que** l'outil de manutention (37) est une fourche comportant des dents (161), lesdites dents constituent les éléments oblongs (16) dudit outil de manutention.

15. Système selon l'une quelconque des revendications précédentes, **caractérisé en ce que** le support (1) est un support de cuisson, ledit support pouvant être un élément chauffant tel qu'une plaque chauffante ou élément réfracta ire.

16. Système selon l'une quelconque des revendications précédentes, **caractérisé en ce que** le support (1) est une pierre réfractaire.

17. Système selon l'une quelconque des revendications précédentes, **caractérisé en ce qu'**il comprend un dispositif de cuisson (38) comprenant :
- plusieurs supports de cuisson (1),
- un axe central (39) agencé pour être mis en rotation,
- des traverses (40) fixées à l'axe central,
- des butées (41),
- des systèmes de maintien en butée (42) ;
et **caractérisé en ce qu'**un support de cuisson (1) est agencé pour être posé en appui sur deux traverses (40) adjacentes et **en ce qu'**un système de maintien en butée (42) exerce une pression constante sur le support de cuisson (1) de manière à maintenir le support de cuisson en pression contre une ou plusieurs butées (41).

18. Utilisation du système selon l'une quelconque des revendications précédentes dans un four (53) de cuisson, tel qu'un four pour la cuisson des pizzas.

## Patentansprüche

1. System zum Handhaben von Nahrungsmittelzubereitungen, enthaltend:
- einen Träger (1), enthaltend:
• eine obere Fläche (2), die dazu vorgesehen ist, eine Nahrungsmittelzubereitung (43) aufzunehmen, und
• eine Mehrzahl von Durchbrüchen (3), die sich zwischen der oberen Fläche und einer unteren Fläche (4) erstrecken,
- eine Überführungsvorrichtung (5) mit einer Mehrzahl von vorspringenden Teilen (6),
- ein System (7, 8, 9, 29, 35, 36, 48, 93) zum relativen Verlagern des Trägers bezüglich zumindest eines Teils der Überführungsvorrichtung, wobei das System **dadurch gekennzeichnet ist, dass** das System zum relativen Verlagern vorgesehen ist, um das System zu positionieren in:
• einer unteren Position (11), in welcher kein vorspringendes Teil bezüglich der oberen Fläche des Trägers vorspringt,
• einer oberen Position (12), in welcher ein Ende (13) zumindest eines vorspringenden Teils durch die Durchbrüche hindurch bezüglich der oberen Fläche des Trägers vorspringend getragen wird, so dass die Nahrungsmittelzubereitung nicht mehr auf der oberen Fläche des Trägers aufliegt;
und dass es ein Handhabungswerkzeug (37) enthält, das längliche Elemente (16) aufweist, die dazu vorgesehen sind, zwischen die vorspringenden Teile eingeführt zu werden.

2. System nach Anspruch 1, **dadurch gekennzeichnet, dass**
- die Überführungsvorrichtung (5) ein Netz aus vorspringenden Teilen (61) enthält, die nach einem Muster angeordnet sind,
- der Träger (1) ein Netz aus Durchbrüchen (31) enthält, die nach einem Muster angeordnet sind, das komplementär zum Muster des Netzes aus vorspringenden Teilen ausgeführt ist;
wobei die Netze dazu vorgesehen sind, dass das Netz aus vorspringenden Teilen in das Netz aus Durchbrüchen eingeführt werden kann.

3. System nach Anspruch 1 oder 2, **dadurch gekennzeichnet, dass** das Handhabungswerkzeug (37) ein Netz aus länglichen Elementen (161) enthält, die nach einem Muster angeordnet sind, das komplementär zum Muster des Netzes aus vorspringenden Teilen (61) ausgeführt ist;
wobei die Netze dazu vorgesehen sind, dass das Netz aus vorspringenden Teilen und das Netz aus länglichen Elementen ineinandergreifen.

4. System nach Anspruch 2 oder 3, **dadurch gekennzeichnet, dass** das Netz aus vorspringenden Teilen (61) eine Anordnung von Unternetzen enthält, wobei die Anordnung aus Unternetzen das Netz aus vorspringenden Teilen bildet; wobei ein Teil eines Unternetzes oder ein Unternetz einem oder mehreren Unternetzen angehören kann.

5. System nach einem der vorangehenden Ansprüche, enthaltend eine Führungsvorrichtung (17, 18), **dadurch gekennzeichnet, dass** zumindest ein Durchbruch (3) ein Führungsdurchbruch (17) ist, der eine Abschrägung (18) auf der Seite der unteren Fläche (4) des Trägers aufweist und in den die vorspringenden Teile (6) eingeführt werden sollen.

6. System nach einem der vorangehenden Ansprüche, enthaltend eine Führungsvorrichtung (17, 18, 19), **dadurch gekennzeichnet, dass** zumindest ein vorspringendes Teil (6) ein vorspringendes Führungsteil (19) ist, das dazu vorgesehen ist, in einen Durchbruch (3, 17) eingeführt zu werden und eine Länge aufweist, die größer als die Längen der weiteren vorspringenden Teile ist.

7. System nach einem der vorangehenden Ansprüche, **dadurch gekennzeichnet, dass** es eine Führungsvorrichtung (17, 18, 19, 20) enthält, die zumindest ein vorspringendes Führungsteil (19) mit einer Abschrägung (20) aufweist.

8. System nach einem der vorangehenden Ansprüche, **dadurch gekennzeichnet, dass** es eine durchgehende, austauschbare Führungsvorrichtung (21, 22) aufweist, enthaltend:
- zumindest eine durchgehende Öffnung (21), die in der Unterseite (4) des Trägers (1) ausgebildet ist,
- zumindest einen Ring (22), der dazu vorgesehen ist, abnehmbar in der zumindest einen durchgehenden Öffnung eingebettet zu werden.

9. System nach einem der Ansprüche 1 bis 7, **dadurch gekennzeichnet, dass** es eine nicht durchgehende, austauschbare Führungsvorrichtung aufweist, enthaltend:
- zumindest eine nicht durchgehende Öffnung, die in der Unterseite (4) des Trägers (1) ausgebildet ist,
- zumindest einen Ring, der dazu vorgesehen ist, abnehmbar in der zumindest einen nicht durchgehenden Öffnung eingebettet zu werden,
- wobei zumindest ein einfahrbares, vorspringendes Führungsteil dazu vorgesehen ist, um in die zumindest eine nicht durchgehende Öffnung eingeführt zu werden und dazu geeignet ist, bezüglich der weiteren vorspringenden Teile (6) relativ verlagert zu werden.

10. System nach einem der Ansprüche 2 bis 9, **dadurch gekennzeichnet, dass** die Überführungsvorrichtung eine Platte (25) enthält und dass die Mehrzahl von vorspringenden Teilen (6) eine Anordnung von Stäben (61) ist, die bezüglich einer oberen Fläche (26) der Platte vorspringen, wobei das Netz (61) und die Unternetze aus Stäben dazu vorgesehen sind, Muster zu bilden, die aus zueinander parallel verlaufenden Linien (27) zusammengesetzt sind und sich in zumindest einer parallel zur oberen Ebene der Platte verlaufenden Richtung erstrecken.

11. System nach einem der Ansprüche 2 bis 10, **dadurch gekennzeichnet, dass** das Netz (61) und die Unternetze aus Stäben dazu vorgesehen sind, Muster zu bilden, die sich aus Kreisen (28) unterschiedlichen Durchmessers zusammensetzen.

12. System nach einem der vorangehenden Ansprüche, **dadurch gekennzeichnet, dass** es eine Einrichtung zum Befestigen der Überführungsvorrichtung (5) oder des Trägers (1) enthält, wobei die Befestigungseinrichtung dazu vorgesehen ist, der Überführungsvorrichtung bzw. dem Träger ein mechanisches Spiel in einer Ebene parallel zur Ebene (30) zu verleihen, in welcher die Unterseite (4) des Trägers enthalten ist.

13. System nach einem der vorangehenden Ansprüche, **dadurch gekennzeichnet, dass** das System zum relativen Verlagern enthält:
- zumindest ein ortfestes Element (48),
- zumindest eine Getriebevorrichtung (91, 92, 93), die mit dem zumindest einen ortsfesten Element verbunden ist,
- zumindest ein Betätigungsglied (8), das dazu vorgesehen ist, die Getriebevorrichtung anzutreiben,
und **dadurch gekennzeichnet, dass** die Befestigungseinrichtung zum Befestigen der Überführungsvorrichtung (5) bzw. des Trägers (1) enthält:
- ein bewegliches Teil (35), das an dem Träger bzw. an der Überführungsvorrichtung befestigt ist,
- ein Verbindungselement (29), das an der Getriebevorrichtung befestigt ist,
- eine Wälzlagervorrichtung (36), die einerseits mit dem beweglichen Teil und andererseits mit dem Verbindungselement verbunden ist, wobei die Getriebevorrichtung dazu vorgesehen ist, das bewegliche Teil bezüglich des zumindest einen ortsfesten Elements relativ zu verlagern.

14. System nach einem der vorangehenden Ansprüche, **dadurch gekennzeichnet, dass** das Handhabungswerkzeug (37) eine Gabel ist, die Zinken (161) aufweist, wobei die Zinken die länglichen Elemente (16) des Handhabungswerkzeugs sind.

15. System nach einem der vorangehenden Ansprüche, **dadurch gekennzeichnet, dass** der Träger (1) ein Garträger ist, wobei der Träger ein Heizelement, wie etwa eine Heizplatte oder ein feuerfestes Element, sein kann.

16. System nach einem der vorangehenden Ansprüche, **dadurch gekennzeichnet, dass** der Träger (1) ein feuerfester Stein ist.

17. System nach einem der vorangehenden Ansprüche, **dadurch gekennzeichnet, dass** es eine Garvorrichtung (38) aufweist, enthaltend:
- mehrere Garträger (1),
- eine Mittelachse (39), die dazu vorgesehen ist, in Drehung versetzt zu werden,
- Querstreben (40), die an die Mittelachse befestigt sind,
- Anschläge (41),
- Anschlaghalteeinrichtungen (42);
und **dadurch gekennzeichnet, dass** ein Garträger (1) dazu vorgesehen ist, in Anlage auf zwei aneinandergrenzende Querstreben (40) gelegt zu werden, und dass eine Anschlaghalteeinrichtung (42) einen konstanten Druck auf den Garträger (1) ausübt, so dass der Garträger an einen oder mehrere Anschläge (41) gedrückt gehalten wird.

18. Verwendung des Systems nach einem der vorangehenden Ansprüche in einem Backofen (53), wie etwa einem Ofen zum Backen von Pizzen.

## Claims

1. System for handling culinary preparations comprising:
- a support (1) comprising:
• an upper surface (2) arranged in order to receive a culinary preparation (43), and
• a plurality of pass-through openings (3) extending between the upper surface and a lower surface (4),
- a transfer device (5) comprising a plurality of projecting portions (6),
- a system for driving relative movement (7, 8, 9, 29, 35, 36, 48, 93) of the support with respect to at least one part of the transfer device,
said system being **characterized in that** the system for driving relative movement is arranged in order to position the system in:
• -a low position (11), in which no projecting portion protrudes with respect to the upper surface of the support,
• -a high position (12), in which one end (13) of the at least one projecting portion protrudes, via the pass-through openings, with respect to the upper surface of the support, such that the culinary preparation no longer rests on the upper surface of the support;
and **in that** it comprises a handling tool (37) comprising oblong elements (16) arranged in order to be inserted between the projecting portions.

2. System according to claim 1, **characterized in that**:
- the transfer device (5) comprises a grid of projecting portions (61) arranged in a pattern,
- the support (1) comprises a grid of pass-through openings (31) arranged in a pattern complementary to the pattern of the grid of projecting portions; said grids being arranged so that the grid of projecting portions can be inserted into the grid of pass-through openings.

3. System according to claim 1 or 2, **characterized in that** the handling tool (37) comprises a grid of oblong elements (161) arranged in a pattern complementary to the pattern of the grid of projecting portions (61);
said grids being arranged so that the grid of projecting portions and the grid of oblong elements interpenetrate.

4. System according to claim 2 or 3, **characterized in that** the grid of projecting portions (61) comprises a set of sub-grids, the set of sub-grids forming the grid of projecting portions; a portion of a sub-grid or a sub-grid being capable of forming part of one or more sub-grids.

5. System according to any one of the preceding claims, comprising a guidance device (17, 18) **characterized in that** at least one pass-through opening (3) is a guide pass-through opening (17) having a chamfer (18) on the side of the lower surface (4) of the support in which the projecting portions (6) are intended to be inserted.

6. System according to any one of the preceding claims, comprising a guidance device (17, 18, 19) **characterized in that** at least one projecting portion (6) is a guide projecting portion (19) being arranged in order to be inserted into a pass-through opening (3, 17) and having a length greater than the lengths of the other projecting portions.

7. System according to any one of the preceding claims, **characterized in that** it comprises a guidance device (17, 18, 19, 20) comprising at least one guide projecting portion (19) having a chamfer (20).

8. System according to any one of the preceding claims, **characterized in that** it comprises an interchangeable through-hole guidance device (21, 22) comprising:
- at least one through-hole (21) produced in the lower face (4) of the support (1),
- at least one ring (22) arranged in order to be removably inserted into the at least one through-hole.

9. System according to any one of claims 1 to 7, **characterized in that** it comprises a blind interchangeable guidance device comprising:
- at least one blind opening produced in the lower face (4) of the support (1),
- at least one ring arranged in order to be removably inserted into the at least one blind opening,
- at least one retractable guide projecting portion, being arranged in order to be inserted into the at least one blind opening and being capable of relative movement with respect to the other projecting portions (6).

10. System according to one of claims 2 to 9, **characterized in that** the transfer device comprises a platen (25) and **in that** the plurality of projecting portions (6) is a set of rods (61) protruding with respect to an upper surface (26) of said platen, the grid (61) and the sub-grids of rods being arranged in order to form patterns composed of rows (27) parallel to one another and extending in at least one direction parallel to the upper plane of the platen.

11. System according to one of claims 2 to 10, **characterized in that** the grid (61) and the sub-grids of rods are arranged in order to form patterns composed of circles (28) of different diameters.

12. System according to any one of the preceding claims, **characterized in that** it comprises a fastening means of the transfer device (5) or of the support (1), said fastening means being arranged in order to give the transfer device or the support a mechanical clearance in a plane parallel to the plane (30) in which the lower face (4) of the support is comprised.

13. System according to any one of the preceding claims, **characterized in that** the system for driving relative movement comprises:
- at least one fixed element (48),
- at least one gearing device (91,92,93) connected to the at least one fixed element,
- at least one actuator (8) arranged in order to drive the gearing device,
and **characterized in that** the fastening means of the transfer device (5) or of the support (1) comprises:
- a moveable part (35) fastened to the support or to the transfer device,
- a connecting element (29) fastened to the gearing device,
- a rolling-element bearing (36) connected on the one hand to the moveable part and on the other hand to the connecting element, said gearing device being arranged in order to drive the moveable part in relative movement with respect to the at least one fixed part.

14. System according to any one of the preceding claims, **characterized in that** the handling tool (37) is a fork comprising prongs (161), said prongs constituting the oblong elements (16) of said handling tool.

15. System according to any one of the preceding claims, **characterized in that** the support (1) is a cooking support, said support being capable of being a heating element such as a hot-plate or refractory element.

16. System according to any one of the preceding claims, **characterized in that** the support (1) is a firestone.

17. System according to any one of the preceding claims, **characterized in that** it comprises a cooking device (38) comprising:
- several cooking supports (1),
- a central shaft (39) arranged in order to be driven in rotation,
- cross members (40) fixed to the central shaft,
- stops (41),
- systems for holding in abutment (42);
and **characterized in that** a cooking support (1) is arranged in order to be placed in abutment on two adjacent cross members (40) and **in that** a system
for holding in abutment (42) exerts a constant pressure on the cooking support (1) so as to hold the cooking support under pressure against one or more stops (41).

18. Use of the system according to any one of the preceding claims in a cooking oven (53), such as an oven for cooking pizzas.
